# EUROPEAN PATENT APPLICATION

(11) **EP 3 646 948 A1**
(43) Date of publication of application: **06.05.2020**
(21) Application number: 19198426.9
(22) Date of filing: 19.09.2019
(51) Int. Cl.: B01J 23/42, B01J 23/44, B01J 23/46, B01J 27/224, B01J 35/00, B01J 37/34, B01D 53/00

(54) **CLUSTER-SUPPORTING CATALYST AND METHOD FOR PRODUCING IT**

(30) Priority: 20.09.2018 JP 2018176575
(71) Applicant: TOYOTA JIDOSHA KABUSHIKI KAISHA, Aichi-ken, 471-8571 (JP); Genesis Research Institute, Incorporated, Nagoya-shi, Aichi-ken 451-0051 (JP)
(72) Inventor: YASUMATSU, Hisato, Aichi-ken, 468-8511 (JP); FUKUI, Nobuyuki, Miyagi-ken (JP); TANAKA, Toshiaki, Aichi-ken, 451-0051 (JP); ITO, Seitoku, Aichi-ken, 451-0051 (JP); HASEGAWA, Jun, Aichi-ken, 451-0051 (JP)
(74) Representative: J A Kemp LLP

(57) **Abstract**

There is provided a catalyst with low-temperature activity, high selectivity, high poisoning resistance and high durability, as well as a method for producing it. A cluster-supporting catalyst having a silicon carbide carrier and precious metal clusters supported on the silicon carbide carrier, and a method for producing the cluster-supporting catalyst that includes sputtering with a precious metal target to generate precious metal clusters, and impacting the generated precious metal clusters on the surface of the silicon carbide carrier to support them on it.

## Description

### FIELD

The present disclosure relates to a cluster-supporting catalyst and a method for producing it, and specifically to a cluster-supporting catalyst for exhaust gas purification, liquid phase chemical synthesis reaction, gas phase chemical synthesis reaction, fuel cell reaction and air battery reaction, and to a method for producing it.

### BACKGROUND

Catalysts having precious metals supported on carriers are used in a wide range of fields, being employed as catalysts for exhaust gas purification, liquid phase chemical synthesis reactions, gas phase chemical synthesis reaction, fuel cell reaction and air battery reaction. The most-widely used supported catalysts are supported catalysts for use in exhaust gas purification.

Specifically, exhaust gas emitted from internal combustion engines for automobiles and the like, such as gasoline engines and diesel engines, include components such as carbon monoxide (CO), hydrocarbons (HC) and nitrogen oxides (NOx). It is common, therefore, exhaust gas purification catalyst apparatuses for the purification of such components are installed in internal combustion engines, whereby the components are essentially decomposed by the exhaust gas purifying catalysts mounted in the exhaust gas purification catalyst apparatuses.

The temperature during purification of the components with an exhaust gas purifying catalyst must be usually as high temperatures as 250°C to 300°C or higher, for example, because the performance of the exhaust gas purifying catalyst is often reduced in lower temperature ranges below such temperatures. In low-temperature ranges, CO or HC that has not been purified often coordinates or bonds with the exhaust gas purifying catalyst, resulting in catalyst poisoning. A solution to this problem is therefore desired.

Various solutions have been proposed for exhaust gas purifying catalysts. PTL 1, for example, discloses a cluster-supported exhaust gas purifying catalyst having Si, and Pt clusters supported on the Si surfaces, wherein a single atomic layer oxide film is formed at the regions of the Si surfaces where the Pt clusters are not supported. The number of Pt atoms in the Pt clusters being 20 to 1000.

NPL 1 discloses an exhaust gas purifying catalyst wherein Pt nanoparticles and Rh nanoparticles are supported on a carrier comprising silicon carbide doped with CeO₂.

NPLs 2 and 3 disclose that catalysts comprising Pt nanocrystals supported on silicon carbide nanocrystals have high electrochemical activity, and that the catalysts can be applied in fuel cells.

NPL 4 discloses a catalyst comprising Pt particles supported on a SiO₂ support, wherein under O₂-rich conditions, the TOF (turnover frequency) increases with decreasing the particle size when the particle size of the catalyst particles is 5 nm or greater, while the TOF decreases with the decreasing particle size when the particle size of the catalyst particles is below 5 nm.

NPL 5 discloses a catalyst comprising Pt particles supported on an Al₂O₃ support, wherein the TOF (turnover frequency) decreases with decreasing the particle size of the catalyst particles when the particle size of the catalyst particles is in the range of 1 to 4 nm.

NPL 6 discloses a catalyst comprising Pd particles supported on an Al₂O₃ support, wherein the TOF (turnover frequency) increases with decreasing the particle size when the particle size of the catalyst particles is 2 nm or greater, while the TOF decreases with decreasing the particle size when the particle size of the catalyst particles is below 2 nm.

### [CITATION LIST]

### [PATENT LITERATURE]

[PTL 1] Japanese Unexamined Patent Publication No. 2016-101570

### [NON PATENT LITERATURE]

[NPL 1] Ledoux et al, CATTECH Volume 5, no.4 2001, p226-246
[NPL 2] Dihiman et al, Journal of Materials Chemistry A, 2013, 1, 6030-6036
[NPL 3] Lv et al, Applied Catalysis B: Environmental 100 (2010), 190-196
[NPL 4] Gracia et al, Journal of Catalysis 220 (2002), 382-391
[NPL 5] Atalik et al, Journal of Catalysis 241 (2006), 268-275
[NPL 6] Yao, Journal of Catalysis 87 (1984), 152-162

### SUMMARY

### [TECHNICAL PROBLEM]

PTL 1 discloses a cluster-supporting catalyst whereby catalysts with low-temperature activity, high selectivity, high poisoning resistance and high durability can be obtained.

However, catalysts with even greater low-temperature activity, high selectivity, high poisoning resistance and high durability are desired.

It is therefore an object of the present disclosure to provide a catalyst with low-temperature activity, high selectivity, high poisoning resistance and high durability, as well as a method for producing it.

### [SOLUTION TO PROBLEM]

The present inventors have found that the aforementioned object can be achieved by the means described below.
<Aspect 1> A cluster-supporting catalyst having a silicon carbide carrier and precious metal clusters supported on the silicon carbide carrier.
<Aspect 2> The catalyst according to aspect 1, wherein the silicon carbide carrier and the precious metal atoms of the precious metal clusters are bonded by metal silicide bonds.
<Aspect 3> The catalyst according to aspect 1 or 2, wherein the heights from the surface of the silicon carbide carrier to the apices of the precious metal clusters are less than 1.0 nm, as measured with a scanning tunneling microscope.
<Aspect 4> The catalyst according to any one of aspects 1 to 3, wherein the electron concentration is increased between the silicon carbide carrier and the precious metal clusters, compared to the other locations of the silicon carbide carrier and/or the other locations of the precious metal clusters.
<Aspect 5> The catalyst according to any one of aspects 1 to 4, wherein the precious metal clusters are Pt clusters, Pd clusters or Rh clusters.
<Aspect 6> The catalyst according to any one of aspects 1 to 5, wherein the number of the precious metal atoms in the precious metal clusters is 2 to 500.
<Aspect 7> The catalyst according to any one of aspects 1 to 6, wherein the number of the atomic layer of the precious metal clusters is four or less from the surface of the silicon carbide carrier.
<Aspect 8> The catalyst according to any one of aspects 1 to 7, wherein the precious metal clusters are supported at the regions of the silicon carbide carrier where the Si is exposed.
<Aspect 9> The catalyst according to any one of aspects 1 to 8, wherein the precious metal clusters are Pt clusters, and the catalyst has the following feature:
   The number of CO molecules oxidized in 1 second per Pt atom is 100 or greater at 560°C or below, when a gas at atmospheric pressure containing 1.0% CO, 1.0% O₂ and 98.0% He has been flowed at 100 cc per minute over the catalyst which contains 480 ng of Pt, while heating the catalyst from room temperature at 1°C per minute.
<Aspect 10> The catalyst according to any one of aspects 1 to 8, wherein the precious metal clusters are Rh clusters, and the catalyst has one of the following features:
   (A) The number of CO molecules oxidized in 1 second per Rh atom is 100 or greater at 440°C or below, when a gas at atmospheric pressure containing 1.0% CO, 1.0% O₂ and 98.0% He has been flowed at 100 cc per minute over the catalyst which contains 660 ng of Rh, while heating the catalyst from room temperature at 1°C per minute,
   (B) The number of NO molecules oxidized in 1 second per Rh atom is 10 or greater at 500°C or below, when a gas at atmospheric pressure containing 0.15% NO, 0.65% CO, 0.25% O₂ and 98.95% He has been flowed at 100 cc per minute over the catalyst which contains 660 ng of Rh, while heating the catalyst from room temperature at 1°C per minute.
<Aspect 11> The catalyst according to any one of aspects 1 to 8, wherein the precious metal clusters are Pd clusters, and the catalyst has the following feature:
   The number of CO molecules oxidized in 1 second per Pd atom is 100 or greater at 420°C or below, when a gas at atmospheric pressure containing 1.0% CO, 1.0% O₂ and 98.0% He has been flowed at 100 cc per minute over the catalyst which contains 430 ng of Pd, while heating the catalyst from room temperature at 1°C per minute.
<Aspect 12> The catalyst according to any one of aspects 1 to 11, which is an exhaust gas purifying catalyst.
<Aspect 13> The catalyst according to any one of aspects 1 to 8, which is an electrode catalyst for a fuel cell.
<Aspect 14> A catalyst layer containing a catalyst according to any one of aspects 1 to 13.
<Aspect 15> The catalyst layer according to aspect 14, further containing a metal complex that contains CeO₂ and ZrO₂, or CeO₂.
<Aspect 16> A method for producing a cluster-supporting catalyst, the method including:
   sputtering a precious metal target to generate precious metal clusters, and impacting the generated precious metal clusters on the surface of a silicon carbide carrier to support them.
<Aspect 17> The method according to aspect 16, which includes removing carbon from a region of the surface of the silicon carbide carrier to expose Si, before supporting the precious metal clusters.
<Aspect 18> The method according to aspect 16 or 17, which includes accumulating a carbon film on a region of the surface of the silicon carbide carrier.

### [ADVANTAGEOUS EFFECTS OF INVENTION]

According to the present disclosure it is possible to provide a catalyst with low-temperature activity, high selectivity, high poisoning resistance and high durability, as well as a method for producing it.

### BRIEF DESCRIPTION OF DRAWINGS

Fig. 1 is a schematic diagram illustrating the principle of purifying CO according to one aspect of the catalyst of the disclosure.
Fig. 2A is a scanning tunneling microscope (STM) image of a catalyst comprising Pt clusters supported on a Si support, before heating at 500°C.
Fig. 2B is an STM image of a catalyst comprising Pt clusters supported on a Si support, after heating at 500°C.
Fig. 3 is an STM image of the surface of the catalyst of Example 1-5.
Fig. 4 is a graph showing distribution of the heights of Pt cluster 30mers supported on regions of the silicon carbide carrier of the catalyst of Example 1-5 where the Si is exposed.
Fig. 5A is a graph showing the spectrum obtained when the surface of the catalyst of Example 1-5 was measured by X-ray photoelectron spectroscopy (XPS).
Fig. 5B is a graph showing the spectrum obtained when the surface of the catalyst of Reference Example 1-2 was measured by X-ray photoelectron spectroscopy (XPS).
Fig. 6A is a graph showing the relationship between an apparent CO oxidation reaction rate constant and catalyst temperature, when exhaust gas was flowed over the catalyst of Example 1-4 under prescribed conditions.
Fig. 6B is an enlarged graph showing the low temperature region (0 to 250°C) of Fig. 6A.
Fig. 7A is a graph showing the relationship between the CO oxidation reaction rate constant and catalyst temperature, when exhaust gas was flowed over the catalyst of Example 1-4 under prescribed conditions.
Fig. 7B is a graph showing CO oxidation catalyst properties, when exhaust gas was flowed over the catalyst of Example 1-4 under prescribed conditions.
Fig. 8A is a graph showing the relationship between a turnover rate and catalyst temperature, when diesel exhaust gas was flowed over the catalyst of Example 1-4 and the catalyst of Reference Example 1-1 under prescribed conditions.
Fig. 8B is a graph showing the relationship between the turnover rate and catalyst temperature, when lean burn exhaust gas was flowed over the catalyst of Example 1-4 and the catalyst of Reference Example 1-1 under prescribed conditions.
Fig. 9 is a graph showing the relationship between the turnover rate and catalyst temperature, when lean burn exhaust gas was flowed over the catalyst of Example 1-4 and the catalyst of Reference Example 1-2 under prescribed conditions.
Fig. 10 is a graph showing the relationship between the turnover rates and catalyst temperature, when lean burn exhaust gas was flowed over the catalyst of Example 1-4 and the catalyst of Reference Example 1-2 under prescribed conditions.
Fig. 11 is a graph showing the relationship between CO, O₂ and CO₂ concentration in a model exhaust gas and catalyst temperature, when a lean burn exhaust gas was flowed over the catalyst of Example 1-1 under prescribed conditions.
Fig. 12A is a graph showing the relationship between the turnover rate and catalyst temperature, when the CO purification catalyst performance of the catalyst of Example 1-1 was measured.
Fig. 12B is a graph showing the relationship between the turnover rate and catalyst temperature, when the CO purification catalyst performance of the catalyst of Reference Example 1-3 was measured.
Fig. 13 is a graph showing the relationship between the turnover rate and catalyst temperature, when the CO purification catalyst performances of the catalyst of Example 1-1, the catalyst of Example 1-2 and the catalyst of Example 1-3 were measured.
Fig. 14 is a graph showing the relationship between the CO purification rate and catalyst temperature, when lean burn exhaust gas was flowed over the sample of Reference Example 3-1 under prescribed conditions.
Fig. 15A is a graph showing the relationship between the CO purification turnover rate and catalyst temperature, when lean burn exhaust gas was flowed over the catalyst of Example 2-1 and the catalyst of Reference Example 2-1 under prescribed conditions.
Fig. 15B is a graph showing the relationship between the NO purification turnover rate and catalyst temperature, when stoichiometric exhaust gas was flowed over the catalyst of Example 2-1 and the catalyst of Reference Example 2-1 under prescribed conditions.
Fig. 16 is a graph showing the relationship between the CO purification turnover rate and catalyst temperature, when lean burn exhaust gas was flowed over the catalyst of Example 1-2, the catalyst of Example 2-1 and the catalyst of Example 3-1 under prescribed conditions.
Fig. 17A is a graph showing the relationship between Pd nanoparticle size and catalytic activity.
Fig. 17B is an enlarged graph showing the range of 0 to 10 nm on the abscissa of the graph of Fig. 17A.

### DESCRIPTION OF EMBODIMENTS

Embodiments of the disclosure will now be explained in detail. The disclosure is not limited to the embodiments described below, however, and various modifications may be implemented within the scope of the gist thereof.

As used herein, the "turnover rate" is an indicator of the performance of a catalyst, and it is defined as the number of molecules (CO, NO, etc.) that can be purified per second averaged by the number of precious metal atoms in the catalyst sample. In other words, the "turnover rate" is the numerical value representing how many molecules can be purified per second on average by a single precious metal atom in the catalyst sample. The number of precious metal atoms in a catalyst sample can be measured by inductively coupled plasma mass spectrometry (ICP-MS), for example.

### <Catalyst>

The catalyst of the disclosure is a cluster-supporting catalyst having a silicon carbide carrier and precious metal clusters supported on the silicon carbide carrier.

Without being limited to any particular principle, the presumed reason for the low-temperature activity, high selectivity, high poisoning resistance and high durability of the catalyst of the disclosure is as follows.

The inventors of the present disclosure have found that there are cases that when a catalyst comprising precious metal clusters such as Pt clusters supported on a Si support is heated, the precious metal clusters dissolve and become embedded in the Si support.

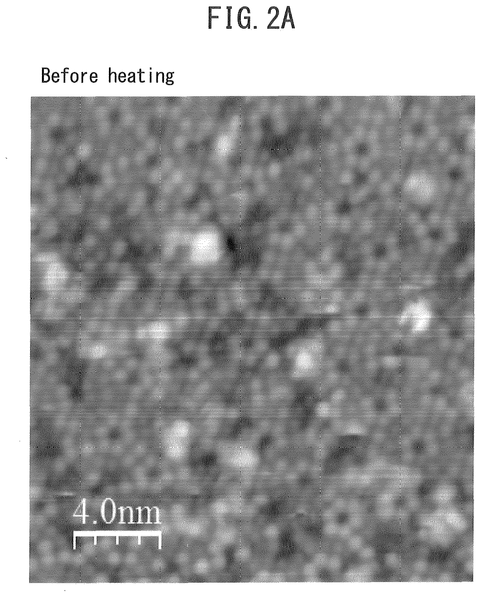

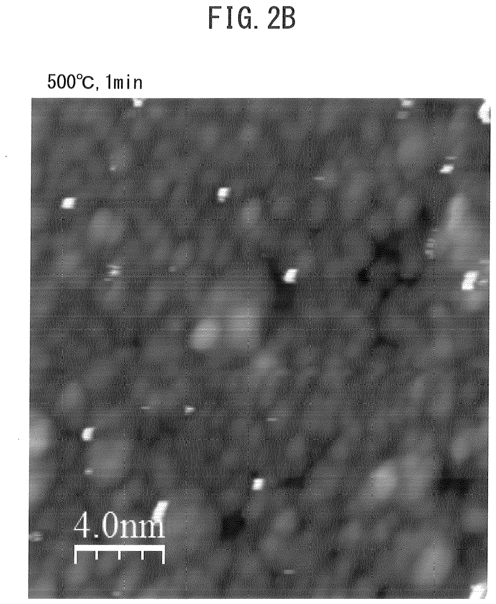

Fig. 2A and 2B are STM images of a cluster-supporting catalyst comprising Pt clusters supported on a Si support, before and after heating at 500°C for one minute.

Before heating, the Pt clusters were supported on the surface of the Si support, as shown in Fig. 2A. After heating, however, the Pt clusters are dissolved and embedded in the Si support, as shown in Fig. 2B.

This is attributed to the large chemical bond strength (bond energy) between Pt and Si. Specifically, it is thought that when the Pt clusters are heated while supported on the Si support, Si-Si vibration (lattice vibration) in the Si support becomes active, resulting in creation of strong bonds of the Pt with the Si in the second and lower layers of the support surface, at a timing corresponding to the increased length of the Si interatomic distance on the outermost surface. Presumably, since more Pt-Si bonds are formed as this repeatedly occurs, the Pt atoms migrate deeper into the support (Pt dissolves in the Si).

As a result of ardent research, the present inventors have found that the durability of a catalyst can be further improved by supporting precious metal clusters on a silicon carbide carrier.

Since precious metal clusters have high bond energy, or in other words high affinity, with Si, it is thought that repeated use of the exhaust gas purifying catalyst causes the precious metal clusters to dissolve into the Si. On the other hand, the precious metal clusters do not have high affinity with C and are therefore less likely to dissolve in C. Silicon carbide has a layered structure with alternating Si layers and C layers. Therefore, even with repeated use of a catalyst having precious metal clusters supported on a silicon carbide carrier, C presumably prevents the precious metal atoms from embedding, making it more difficult for the precious metal clusters to sink into the silicon carbide carrier.

Moreover, the high affinity between the Si of the silicon carbide carrier and the precious metal clusters is thought to inhibit migration of the clusters or fusion between the clusters due to the affinity between the Si and precious metal, even when the catalyst is used in a harsh environment of high-temperature reactive gas, or acidity or basicity.

Therefore, it is thought that the cluster-supporting catalyst of the disclosure can improve the durability of the metal clusters and increase the effective concentration of metal clusters or reaction molecules that contribute to the catalytic reaction.

Furthermore, in the cluster-supporting catalyst of the disclosure, the electron concentration is increased between the precious metal clusters and the surfaces of the silicon carbide carrier where the Si is exposed, compared to the other locations of the silicon carbide carrier and/or the other locations of the precious metal clusters. This is presumably the reason for the effect of inhibiting catalyst poisoning caused by obtaining catalytic activity at low temperature. It is thought that this allows the amount of catalyst metal to be reduced.

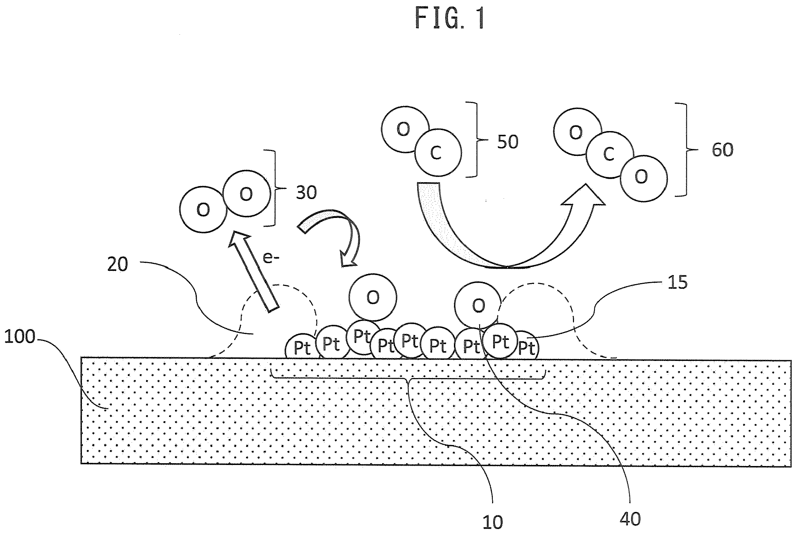

Fig. 1 is a schematic diagram illustrating the principle of purifying CO according to one aspect of the cluster-supporting catalyst of the disclosure.

As shown in Fig. 1, the cluster-supporting catalyst of the disclosure has a structure with precious metal clusters such as the Pt cluster 10, as a catalyst metal, supported on a silicon carbide carrier 100. Between the Pt cluster 10 and the silicon carbide carrier 100, it is thought that there are regions 20 present with increased electron concentration compared to the other locations of the silicon carbide carrier 100. While not shown in the drawing, the regions 20 with the increased electron concentration are thought to be present not only around the edges of the Pt cluster but also the entire interfacial area between the Pt cluster 10 and the silicon carbide carrier 100. The Pt cluster 10 shown in Fig. 1 is composed of multiple Pt atoms 15, but Fig. 1 is not intended to impose a limit of multiple Pt atoms 15 forming the Pt cluster 10.

The principle on the purification of CO by the catalyst of the disclosure is thought to be as follows. As shown in Fig. 1, the regions 20 of the increased electron concentration between the Pt cluster 10 and the silicon carbide carrier 100 donate electrons to oxygen molecules 30 in the atmosphere, breaking the bonds between the oxygen atoms of the oxygen molecules 30, upon which the activated oxygen atoms 40 migrate onto the Pt cluster 10. Carbon monoxide molecules 50 react with the activated oxygen atoms 40 present on the Pt cluster 10, forming carbon dioxide molecules 60.

In the catalyst of the disclosure, the silicon carbide carrier and the precious metal atoms of the precious metal clusters may also be bonded by metal silicide bonds. More specifically, the precious metal atoms in the precious metal clusters and the Si in the silicon carbide may be bonded by metal silicide bonds. If the precious metal atoms in the precious metal clusters and the Si in the silicon carbide are bonded by metal silicide bonds, then presumably the electrons of the precious metal atoms will be drawn toward the Si, thus forming regions with increased electron concentration between the Pt clusters and the silicon carbide carrier.

The use of the catalyst of the disclosure is not restricted, and for example, it may be used as an exhaust gas purification catalyst or an electrode catalyst for a fuel cell.

### <Precious metal clusters>

The precious metal clusters are not particularly restricted so long as they are precious metal clusters, and examples include Pt clusters, Pd clusters and Rh clusters.

The precious metal clusters may comprise several to several thousand precious metal atoms bonded together. The number of precious metal atoms in the precious metal clusters may be from 2 to 1000.

If the number of precious metal atoms composing the precious metal clusters is too large, such as more than 1000, the fraction of the precious metal atoms that can be affected by the support will decrease, and presumably higher performance of the catalyst will not be achieved since the clusters will exhibit properties of bulk materials. In addition, since a larger number of precious metal atoms results in smaller specific surface area of the precious metal clusters, the ratio of precious metal atoms exposed on the cluster surfaces and contributing to the catalyst decreases, while conversely the fraction of the precious metal atoms inside the clusters, that do not contribute to the catalyst, increases, resulting in increase in the amount of precious metals used in the catalyst.

The number of the precious metal atoms in the precious metal clusters may be two or more, 10 or more, 20 or more, 30 or more or 40 or more, and 1000 or less, 500 or less, 300 or less, 100 or less, 50 or less, 40 or less or 30 or less. The number of the precious metal atoms in the precious metal clusters may especially be from 2 to 500.

The shapes of the precious metal clusters may be any desired shapes, but they are preferably layered shapes with the platinum atoms spread out two-dimensionally.

The number of the atomic layers in the precious metal clusters may be one or more layers, two or more layers or three or more layers, and four layers or less, three layers or less or two layers or less, from the surface of the silicon carbide carrier. The number of the atomic layers in the precious metal clusters may also be four layers or less on average. This is because a smaller number of atomic layers increases the fraction of the total number of the precious metal atoms bonding to the Si surface of the silicon carbide, with respect to the total number of precious metal atoms composing the precious metal clusters.

The number of the atomic layers of the clusters can be measured by a transmission electron microscope (TEM), a high-angle annular dark-field scanning transmission electron microscope (HAADF-STEM) or by Rutherford backscattering. The number of the atomic layers of a cluster may be determined by the height from the surface of the silicon carbide carrier to the apex of the precious metal cluster.

For each of the precious metal clusters of the catalyst of the disclosure, the height from the surface of the silicon carbide carrier to the apex of the precious metal cluster may be less than 1.0 nm, as measured with a scanning tunneling microscope.

When the precious metal is Pt, the peak may be from 0.3 nm to 0.45 nm. A height within this range corresponds to one to two atomic layers of the Pt cluster.

### <Silicon carbide carrier>

The catalyst of the disclosure has a silicon carbide carrier as the support. The structure of the silicon carbide carrier is not restricted, and it may be crystalline, and especially crystalline having a layered structure with alternating Si layers and C layers.

The silicon carbide carrier may also be a support having a silicon carbide thin-film layered on another substrate, and as an example, it may be a support having a silicon carbide thin-film layered on a Si substrate. When the silicon carbide carrier is a support having a silicon carbide thin-film layered on another substrate, the precious metal clusters may be supported on the surface of the silicon carbide thin-film.

The surface of the silicon carbide carrier, and especially the surface where the precious metal clusters are supported, may have regions where the carbon film is accumulated and regions where the Si is exposed. In this case, the precious metal clusters may be supported at the regions where the Si is exposed.

### <Catalyst performance>

When the precious metal clusters of the catalyst of the disclosure are Pt clusters, the catalyst may have the following feature.

The number of CO molecules oxidized in 1 second per Pt atom, i.e. the CO purification turnover rate of the catalyst, is 100 or greater at 560°C or below, when a gas at atmospheric pressure containing 1.0% CO, 1.0% O₂ and 98.0% He has been flowed at 100 cc per minute over the catalyst which contains 480 ng of Pt, while heating the catalyst from room temperature at 1°C per minute.

When the precious metal clusters of the catalyst of the disclosure are Pt clusters, the temperature at which the CO purification turnover rate of the catalyst is 100 or greater may be 560°C or below, 550°C or below or 540°C or below, and 520°C or higher, 530°C or higher or 540°C or higher.

When the precious metal clusters of the catalyst of the disclosure are Rh clusters, the catalyst may have either one of the following feature (A) or (B) or both of them:
(A) The number of CO molecules oxidized in 1 second as the value per Rh atom, i.e. the CO purification turnover rate of the catalyst, is 100 or greater at 440°C or below, when a gas at atmospheric pressure containing 1.0% CO, 1.0% O₂ and 98.0% He has been flowed at 100 cc per minute over the catalyst which contains 660 ng of Rh, while heating the catalyst from room temperature at 1°C per minute.
   For feature (A), when the precious metal clusters of the catalyst of the disclosure are Rh clusters, the temperature at which the CO purification turnover rate of the catalyst is 100 or greater may be 440°C or below, 430°C or below or 420°C or below, and 400°C or higher, 410°C or higher or 420°C or higher.
(B) The number of NO molecules reduced in 1 second per Rh atom, i.e. the NO purification turnover rate of the catalyst, is 10 or greater at 500°C or below, when a gas at atmospheric pressure containing 0.15% NO, 0.65% CO, 0.25% O₂ and 98.95% He has been flowed at 100 cc per minute over the catalyst which contains 660 ng of Rh, while heating the catalyst from room temperature at 1°C per minute.

For feature (B), when the precious metal clusters of the catalyst of the disclosure are Rh clusters, the temperature at which the NO purification turnover rate of the catalyst is 10 or greater may be 500°C or below, 490°C or below or 480°C or below, and 440°C or higher, 450°C or higher or 460°C or higher.

When the precious metal clusters of the catalyst of the disclosure are Pd clusters, the catalyst may have the following feature:

The number of CO molecules oxidized in 1 second per Pd atom, i.e. the CO purification turnover rate of the catalyst, is 100 or greater at 420°C or below, when a gas at atmospheric pressure containing 1.0% CO, 1.0% O₂ and 98.0% He has been flowed at 100 cc per minute over the catalyst which contains 430 ng of Pd, while heating the catalyst from room temperature at 1°C per minute.

When the precious metal clusters of the catalyst of the disclosure are Pd clusters, the temperature at which the CO purification turnover rate of the catalyst is 100 or greater may be 420°C or below, 410°C or below or 400°C or below, and 380°C or higher, 390°C or higher or 400°C or higher.

### <Catalyst layer>

The cluster-supporting catalyst of the disclosure may be used as a catalyst layer, for example. The catalyst layer may also contain a plurality of other metal cluster catalysts or cocatalysts.

The catalyst layer may also contain a metal complex that contains CeO₂ and ZrO₂, or CeO₂, in addition to the cluster-supporting catalyst of the disclosure. If the catalyst layer further contains a metal complex that contains CeO₂ and ZrO₂, or CeO₂, then it is believed that even higher NO purification performance can be obtained.

### <Method for producing catalyst>

The cluster-supporting catalyst of the disclosure may be produced, for example, by a method of creating precious metal clusters, and supporting the created precious metal clusters on a support.

### <Supporting of precious metal clusters on support>

In the method of the disclosure, supporting of the precious metal clusters on the support includes, for example, sputtering a precious metal target to generate the precious metal clusters, and impacting the generated precious metal clusters on the surface of a silicon carbide carrier to support them.

The precious metal target used for sputtering may be, for example, a tabular or discoid sputtering target prepared by molding and sintering precious metal powder.

The sputtering may be carried out under any desired appropriate conditions including, for example, a suitable gas component, gas pressure, sputtering current, voltage, time and frequency.

The gas component to be used for the sputtering may be an inert gas, such as helium (He), neon (Ne), argon (Ar), krypton (Kr), xenon (Xe) or nitrogen (N₂). Of these, Ar and N₂ are preferred from the viewpoint of ease of handling.

The gas pressure used for the sputtering may be arbitrarily selected so long as it is a gas pressure that allows plasma to be produced, but it is generally preferred to be no greater than 20 Pa.

The current and voltage used for sputtering may be appropriately set depending on the conditions that facilitate formation of precious metal clusters composed of the desired number of precious metal atoms, and depending on the sputtering apparatus.

The sputtering time may be set as appropriate in consideration of the desired accumulation amount of the precious metal clusters and other parameters, and is not particularly restricted, but for example, it may be appropriately set within a range of several tens of minutes to several hours or several tens of hours or longer.

The sputtering may be divided into several times over several hours, in order to prevent the temperature of the precious metal clusters on the support from increasing to a high temperature that causes sintering when, for example, sputtering is conducted for an extended time.

Sintering refers to the phenomenon of particle growth of fine metal particles at a temperature of below their melting point.

In the method of the disclosure, support of the precious metal clusters on the silicon carbide carrier may be carried out by impacting the surface of the silicon carbide carrier with precious metal clusters that have been accelerated by application of a voltage.

The voltage applied to the precious metal clusters is adjusted as desired in consideration of the energy for the impact of the precious metal clusters on the surface of the silicon carbide carrier.

An excessively large energy for the impact of the precious metal clusters onto the surface of the silicon carbide carrier will cause the precious metal clusters to sink or become embedded in the surface of the silicon carbide carrier. When the precious metal clusters sink or become embedded in the surface of the silicon carbide carrier, reactant species such as CO and NOx are less likely to approach the precious metal clusters, and the effect of oxidation and reduction of the reactant species can potentially be reduced.

Therefore, the energy for impact of the precious metal clusters onto the surface of the silicon carbide carrier may be 0 eV or greater and 9.0 eV or less per precious metal atom, from the viewpoint of preventing the precious metal clusters from excessively sinking into the surface of the silicon carbide carrier. The energy may be 0 eV or greater, 1.0 eV or greater, 2.0 eV or greater, 3.0 eV or greater or 4.0 eV or greater, and 9.0 eV or less, 8.0 eV or less, 7.0 eV or less or 6.0 eV or less.

The method of the disclosure may optionally include selection of precious metal clusters with a mass filter, between creation of the precious metal clusters and supporting of the created precious metal clusters on the silicon carbide carrier. If a mass filter is used it will be possible to extract only precious metal clusters composed of the prescribed number of the precious metal atoms.

For example, precious metal clusters composed of a specific number of precious metal atoms may be selected so as to exhibit a particularly high catalytic effect, and the selected precious metal clusters may be selectively supported on the surface of the silicon carbide carrier.

The mass filter used may be any optionally selected mass filter, such as a quadrupole mass spectrometer.

### <Treatment of silicon carbide carrier>

The carbon may be removed from a region of the surface of the silicon carbide carrier to expose the Si before supporting the precious metal clusters. This can increase the amount of Si capable to bond with the precious metal atoms in the precious metal clusters.

The method of removing the carbon from regions of the surface of the silicon carbide carrier may be sublimation by, for example, heating the silicon carbide carrier in an oxygen-free atmosphere (for example, hydrogen or argon) to convert the carbon to hydrocarbons. In this case, the atmosphere pressure and composition and the temperature may be controlled so that the Si does not react. In order to prevent the carbon inside the silicon carbide from segregating on the surface during the cooling process after heating, the temperature may be lowered while reacting the carbon on the surface with hydrogen or oxygen for its removal. When Si also reacts during this treatment, an operation for Si cleaning may be carried out, by a method such as heating in an oxygen or hydrogen atmosphere.

A carbon film may also be accumulated on regions of the surface of the silicon carbide carrier. The carbon film may be accumulated either before or after supporting the precious metal clusters on the silicon carbide carrier. This will allow the catalyst of the disclosure to have increased performance when it is used as an electrochemical functional substance, such as a fuel cell catalyst, for example, since conductivity is ensured by active addition of carbon.

The method of accumulating a carbon film on regions of the surface of the silicon carbide carrier may be a method of carbon vapor deposition, for example.

From the viewpoint of supporting the precious metal clusters on regions of the surface of the silicon carbide carrier where the Si is exposed, accumulation of a carbon film on the surface of the silicon carbide carrier may be carried out after supporting the precious metal clusters on the silicon carbide carrier.

### EXAMPLES

### <Examples and Reference Examples>

### <Example 1-1>

The sputtering was carried out on a Pt target to obtain a catalyst for Example 1-1 having Pt cluster 30mers supported on silicon carbide powder. The silicon carbide powder was filled into a quartz tube to prepare a sample. The Pt content of the sample was 500 ng.

### <Examples 1-2 and 1-3>

The catalyst of Example 1-2 was a catalyst having Pt cluster 20mers supported on silicon carbide powder, and the catalyst of Example 1-3 was a catalyst having Pt cluster 10mers supported on silicon carbide powder.

These catalysts were prepared by the same method as Example 1-1, except for changing the types and number of atoms of the precious metal clusters supported on the silicon carbide powder. The Pt content of the sample were 480 ng for the catalyst of Example 1-2 and 500 ng for the catalyst of Example 1-3.

### <Example 1-4>

The catalyst of Example 1-4 was a catalyst having Pt clusters (including 1 to 40mers) supported on silicon carbide powder.

These catalysts were prepared by the same method as Example 1-1, except for changing the types and number of atoms of the precious metal clusters supported on the silicon carbide powder. The Pt content of the sample was 1760 ng.

### <Example 1-5>

The catalyst of Example 1-5 was a catalyst having Pt cluster 30mers supported on single crystal 6H-SiC (0001) as a silicon carbide carrier. For observation of the form and electronic state of the catalyst, the surface on the silicon side of the single crystal 6H-SiC (0001) surface substrate was polished to a mirror surface condition.

The catalyst was produced in the same manner as Example 1-1, except for changing the support from silicon carbide powder to the single crystal 6H-SiC (0001) surface substrate. The Pt content of the sample was 30 ng.

The surface on the silicon side of the single crystal 6H-SiC (0001) surface substrate was polished to a mirror surface condition. Before impacting the support with Pt cluster ions, the substrate surface was heat treated for 15 minutes each at 873K and 1273K, in hydrogen at 10⁻³ Pa, for cleaning of the substrate surface.

### <Example 2-1>

The catalyst of Example 2-1 was a catalyst having Rh cluster 30mers supported on silicon carbide powder.

The catalyst was produced in the same manner as Example 1-1, except for changing Pt to Rh. The Rh content of the sample was 660 ng.

### <Example 3-1>

The catalyst of Example 3-1 was a catalyst having Pd cluster 30mers supported on silicon carbide powder.

The catalyst was produced in the same manner as Example 1-1, except for changing Pt to Pd. The Pd content of the sample was 430 ng.

### <Reference Example 1-1>

The catalyst of Reference Example 1-1 was a catalyst comprising a mixture of a practical Pt catalyst (elemental composition: 0.61 wt% Pt, 32 wt% alumina, 15 wt% ceria, 31 wt% zirconia and 21 wt% remainder) and quartz sand.

The catalyst was produced by the following method.

Quartz sand was added to the practical Pt catalyst (elemental composition: 0.61 wt% Pt, 32 wt% alumina, 15 wt% ceria, 31 wt% zirconia and 21 wt% remainder), and they were mixed overnight with a rotating stirrer to obtain a homogeneous mixture of the practical catalyst and quartz sand. The mixture was then filled in a quartz glass tube. The Pt content in the quarts glass tube was 1000 ng.

### <Reference Example 1-2>

The catalyst of Reference Example 1-2 was a catalyst comprising Pt nanoparticles (diameter ∼ 2 to 5 nm) supported on silicon carbide powder.

The catalyst was produced in the same manner as Example 1-1, except for changing the sputtering conditions. The Pt content of the sample was 1000 ng.

### <Reference Example 1-3>

The catalyst of Reference Example 1-3 was a catalyst comprising Pt cluster 30mers supported on a cerium oxide substrate.

The catalyst was produced in the same manner as Example 1-1, except for using a cerium oxide substrate instead of silicon carbide powder. The Pt content of the sample was 30 ng.

### <Reference Example 2-1>

The catalyst of Reference Example 2-1 was a catalyst comprising Rh nanoparticles (diameter ∼ 2 to 6 nm) supported on silicon carbide powder.

The catalyst was produced by supporting Rh nanoparticles on silicon carbide powder. The Rh content of the sample was 500 ng.

### <Reference Example 3-1>

Reference Example 3-1 was a sample comprising silicon carbide powder filled in a quartz glass tube.

### <Reference Example 3-2>

Reference Example 3-2 was a sample having the half volume of silicon carbide powder reduced to half that of Reference Example 3-1, and compensated by addition of the equal volume of quartz sand.

The constructions of the examples and reference examples are summarized in Table 1 below.

### [Table 1]

**Table 1**

| Example | Catalyst metal | Catalyst metal amount (ng) | Support |
|---|---|---|---|
| Example 1-1 | Pt cluster 30mers | 500 | Silicon carbide powder |
| Example 1-2 | Pt cluster 20mer | 480 | Silicon carbide powder |
| Example 1-3 | Pt cluster 10mer | 500 | Silicon carbide powder |
| Example 1-4 | Pt clusters (including all from atomic number 1-40) | 1760 | Silicon carbide powder |
| Example 1-5 | Pt cluster 30mers | 30 | Single crystal 6H-SiC (0001) surface substrate |
| Example 2-1 | Rh cluster 30mer | 660 | Silicon carbide powder |
| Example 3-1 | Pd cluster 30mer | 430 | Silicon carbide powder |
| Reference Example 1-1 (practical catalyst) | Pt: 0.61 wt% | 1000 | Alumina: 32 wt%, |
| | | | Ceria: 15 wt%, |
| | | | Zirconia: 31 wt%, |
| | | | Other: 21 wt% |
| Reference Example 1-2 | Pt nanoparticles (diameter ~2-5 nm) | 1000 | Silicon carbide powder |
| Reference Example 1-3 | Pt cluster 30mers | 30 | Cerium oxide substrate |
| Reference Example 2-1 | Rh nanoparticles (diameter ∼2-6 nm) | 500 | Silicon carbide powder |
| Reference Example 3-1 | - | - | Silicon carbide powder |
| Reference Example 3-2 | - | - | Silicon carbide powder + quartz sand (1:1 ratio) |

### <Observation of catalyst form and electronic state>

### <Observation of form>

The surface of the catalyst of Example 1-5 (catalyst metal: Pt cluster 30mers, support: single crystal 6H-SiC (0001) surface substrate) was observed using a scanning tunneling microscope (STM).

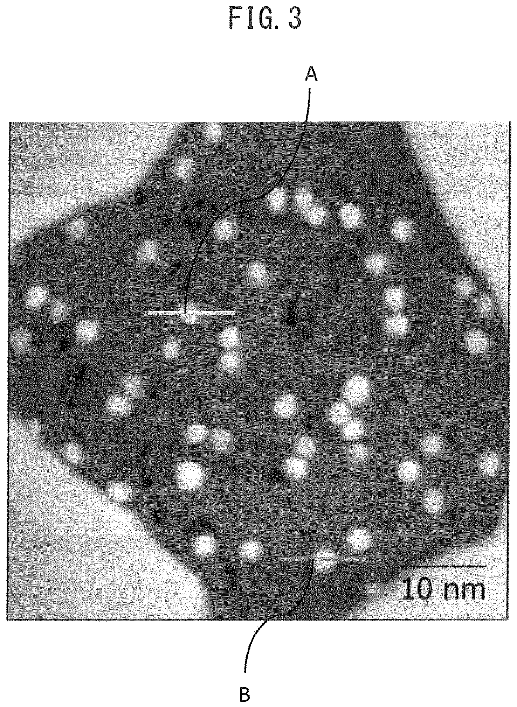

Fig. 3 is a scanning tunneling microscope (STM) image of the surface of the catalyst of Example 1-5. As shown in Fig. 3, Pt cluster 30mers were supported in the regions of the single crystal 6H-SiC where the Si was exposed. It may be concluded that the Pt cluster 30mers were stably supported on the surface without diffusion.

While not shown here, when the catalyst of Example 1-5 was heated at 800°C for 5 minutes, and then allowed to cool to room temperature and observed by STM, there remained Pt cluster 30mers supported on the single crystal 6H-SiC where the Si was exposed.

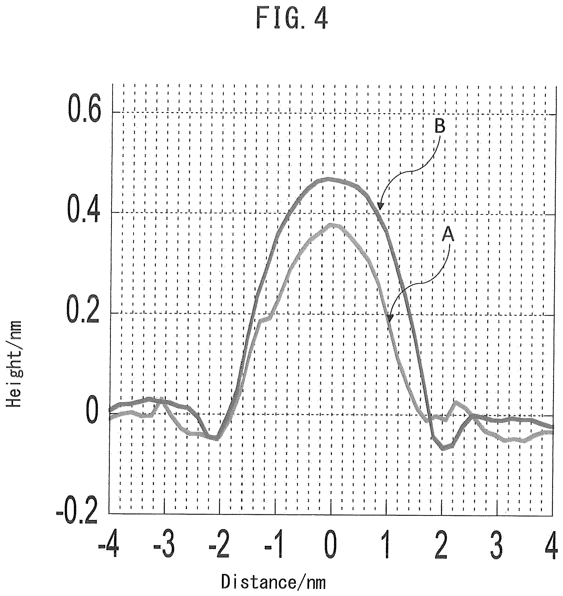

Fig. 4 is a graph showing distribution of the heights of Pt cluster 30mers supported on the single crystal 6H-SiC of the catalyst of Example 1-5 where the Si was exposed. The peak of the cluster heights was 0.4 nm for the A region of Fig. 3, and 0.5 nm for the B region of Fig. 3. That is, in Example 1-5, the heights of the Pt cluster 30mers supported on the single crystal 6H-SiC were no greater than twice the lengths of the metal silicide bonds, meaning that nearly all of the Pt atoms were bonded with the Si of the single crystal 6H-SiC and exposed on the surface.

In the examples of the disclosure, the heights of the Pt cluster 30mers are defined as the heights from the surface of the silicon carbide carrier to the apices of the Pt cluster 30mers.

### <Measurement of electronic state>

The electronic states of the surfaces of the catalysts of Example 1-5 (catalyst metal: Pt cluster 30mers, support: single crystal 6H-SiC (0001) surface substrate) and Reference Example 1-2 (catalyst metal: Pt nanoparticles, support: silicon carbide powder) were measured by X-ray photoelectron spectroscopy (XPS).

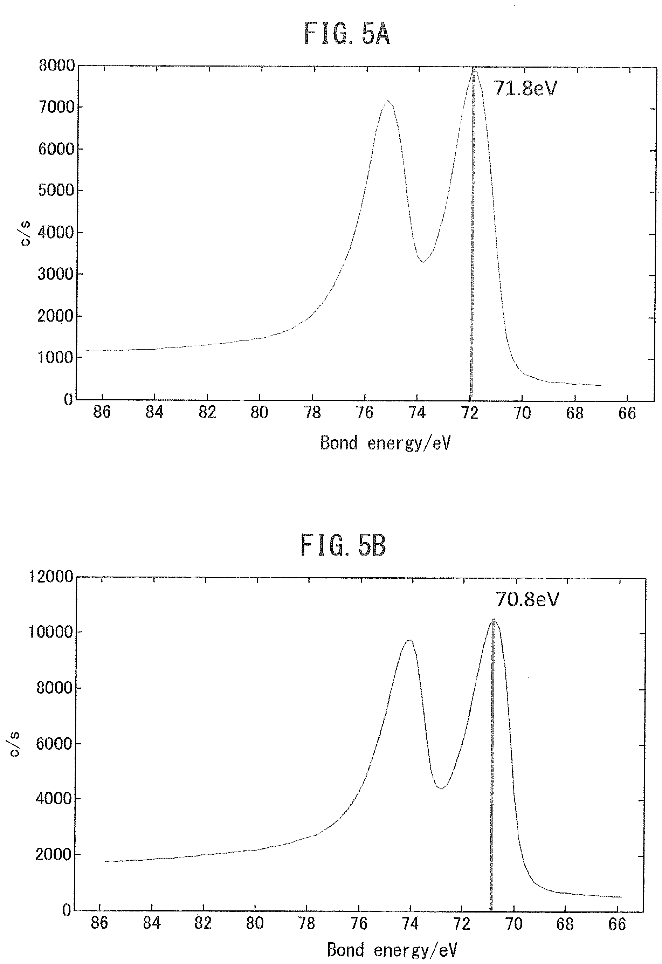

Fig. 5A is a graph showing the spectrum obtained when the surface of the catalyst of Example 1-5 was measured by X-ray photoelectron spectroscopy (XPS). Fig. 5B is a graph showing the spectrum obtained when the surface of the catalyst of Reference Example 1-2 was measured by X-ray photoelectron spectroscopy (XPS). Two peaks are present in each of the spectra shown in these graphs. One of them with the lower electron bond energy (the peak on the right of each graph) is due to the electrons released from the 7/2 spin-orbit sublevel of the Pt4f atomic orbitals, and the other with the higher electron bond energy (the peak on the left of each graph) is due to the electrons released from the 5/2 spin-orbit sublevel of the Pt4f atomic orbitals.

Focusing on the peaks of the 7/2 spin-orbit sublevel (the peak on the right of each graph), the peak in the spectrum of the catalyst of Reference Example 1-2 was located at 70.8 eV, while the peak in the spectrum of catalyst of Example 1-5 was located at 71.8 eV.

The peak located at 70.8 eV is attributed to electrons released when Pt chemically bonded with Pt absorbs X-rays, while the peak located at 71.8 eV is attributed to electrons released when Pt chemically bonded with Si absorbs X-rays (see database of National Institute of Standards and Technology NIST, USA).

Therefore, most of the Pt atoms in the catalyst of Reference Example 1-2 are metallically bonded together, whereas most or all of the Pt atoms in the catalyst of Example 1-5 are bonded with Si of the single crystal 6H-SiC (0001) surface substrate.

This result indicates that in the catalyst of Example 1-5, the electrons of the precious metal atoms are drawn to the Si, thus forming regions of increased electron concentration between the Pt clusters and the silicon carbide carrier.

The bond energies shown in Fig. 5A and Fig. 5B represent the bond energies for the electrons relatively farther from the atomic nucleus of Pt (electrons in the 4f orbital).

This bond energy represents magnitude of the force with which the 4f electrons are attracted to the atomic nucleus. Since the positive charge of the atomic nucleus is diluted by the negative charge of the electrons surrounding it, more electrons surrounding the atomic nucleus results in screening the positive charge of the atomic nucleus at a larger extent, while fewer electrons surrounding the atomic nucleus results in screening the positive charge of the atomic nucleus at a less extent. Therefore, a high bond energy means that the number of electrons surrounding the atomic nucleus is small, while conversely a low bond energy means that a greater number of electrons are surrounding the atomic nucleus.

Consequently, the fact that the peak in the spectrum of the catalyst of Example 1-5 was not 70.8 eV, as the peak in the spectrum representing chemical bonds between Pt, but rather 71.8 eV, as the peak in the spectrum representing the chemical bonds between Si and Pt, indicates that in the catalyst of Example 1-5, the Pt electrons were attracted to Si, and that the Pt atomic nuclei bonded to Si had smaller density of the surrounding electrons than the Pt atomic nuclei bonded to Pt.

### <Evaluation of exhaust gas purification capacity of catalyst comprising Pt clusters supported on silicon carbide carrier>

The exhaust gas purification capacity of a catalyst having Pt clusters supported on a silicon carbide carrier was evaluated in the following manner. The exhaust gases used for evaluation of the exhaust gas purification capacity were as listed in Table 2 below.

### [Table 2]

**Table 2**

| Exhaust gas type | Composition | Total pressure (atm. pressure) |
|---|---|---|
| Diesel exhaust gas | CO: 0.30%, O₂: 8.00%, He: balance | 1 |
| Lean burn exhaust gas | CO: 1.00%, O₂: 1.00%, He: balance | 1 |
| Stoichiometric exhaust gas | CO: 0.65%, O₂: 0.25%, NO: 0.15%, He: balance | 1 |

### <Relationship between reaction conditions and reaction mechanism>

### (Measuring method)

In order to confirm that the reaction mechanism does not change depending on the reaction conditions, reaction rates were compared for exhaust gases flowed over the catalyst of Example 1-4 (catalyst metal: Pt clusters (number of atoms: 1 to 40), support: silicon carbide powder) under the conditions shown in Table 3 below at the specified flow rate.

### [Table 3]

**Table 3**

| | Exhaust gas type | Flow rate (CC/min) | Temperature elevating/lowering rate (°C/min) | Maximum temperature (°C) |
|---|---|---|---|---|
| Conditions 1 | Diesel exhaust gas | 10 | 10 | 800 |
| Conditions 2 | Lean burn exhaust gas | 10 | 10 | 800 |
| Conditions 3 | Lean burn exhaust gas | 20 | 10 | 800 |

For quantitative comparison reflecting differences in the reaction conditions, the measurement results were analyzed according to the Langmuir-Hinshelwood mechanism that has been commonly proposed as the reaction mechanism for the CO oxidation. Specifically, the apparent reaction rate constant (mean value for the entire catalyst) was determined, assuming the reaction rate to be proportional to the O₂ partial pressure and inversely proportional to the CO partial pressure.

The CO oxidation catalyst properties of the catalyst of Example 1-4 were then measured upon flowing exhaust gas under the conditions shown in Table 4 below.

### [Table 4]

**Table 4**

| | Exhaust gas type | Flow rate (CC/min) | Temperature elevating/lowering rate (°C/min) | Maximum temperature (°C) |
|---|---|---|---|---|
| Conditions 4 | Lean burn exhaust gas | 20 | 1 (spontaneous temperature lowering: minus several °C/min) | 800 |
| Conditions 5 | Lean burn exhaust gas | 20 | 1 | 800 |

### (Results and discussion)

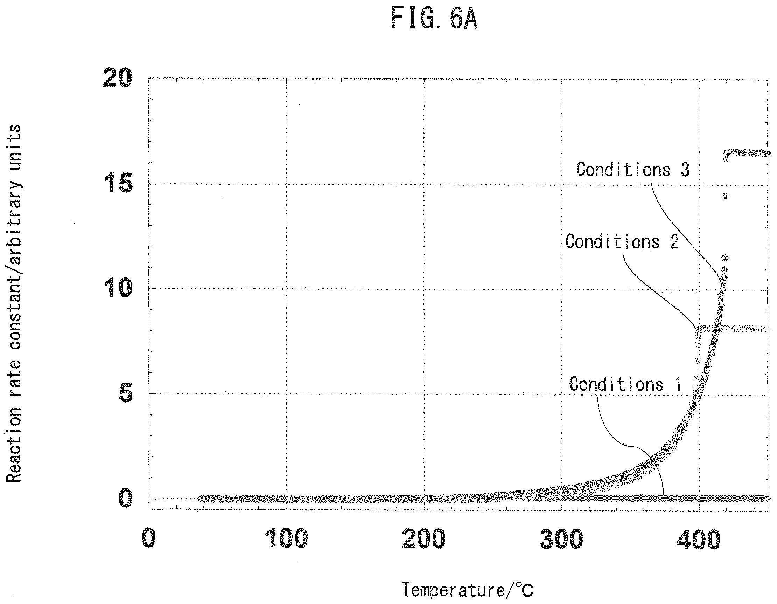

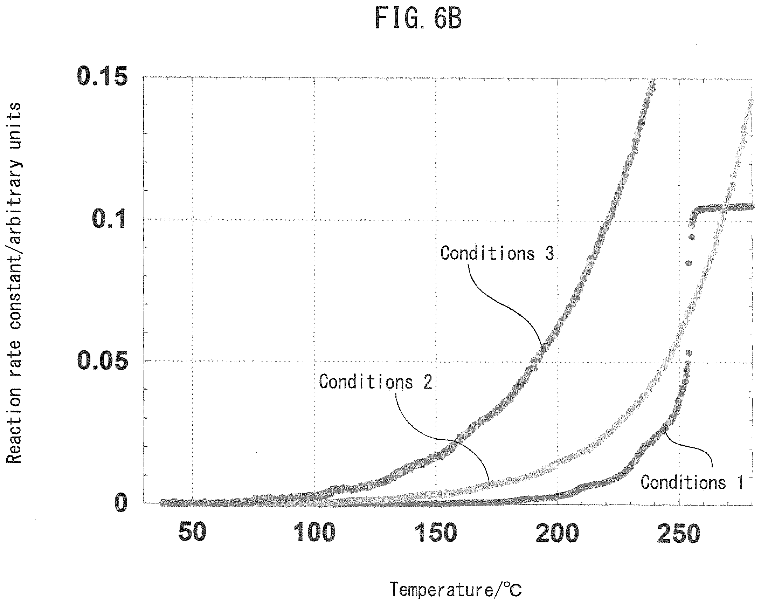

Fig. 6A is a graph showing the relationship between the apparent CO oxidation reaction rate constant and catalyst temperature, when exhaust gas was flowed over the catalyst of Example 1-4 under conditions 1 to 3. Fig. 6B is an enlarged graph showing the low temperature region (0 to 250°C) of Fig. 6A. As shown in Fig. 6A and Fig. 6B, the temperature dependence of the reaction rate constant was approximately the same even under different reaction conditions. The slight difference at the low temperature sections is attributed to the measuring method, and it was negligibly small. Under all of the conditions, therefore, catalytic reaction proceeds by the Langmuir-Hinshelwood mechanism, thus guaranteeing the correct conclusion is reached, even when measurement results under different conditions are analyzed using the same method. It also guarantees high reproducibility and precision for a series of measurements.

The slight differences in the low-temperature range in Fig. 6B are attributed to a different temperature measuring location and a gas compositional analysis location. That is, since several minutes are required for the reaction gas to flow from the temperature measuring location to the compositional analysis location, the temperature and composition measured at the same time are for different gases. In addition, since gas mixing takes place due to convection current and diffusion during the reaction-gas flow from the temperature measuring location to the compositional analysis location, the reaction gases at different temperatures were mixed when their composition analysis was made. Since the time difference varies depending on the gas flow rate, the correlation between temperature and catalytic activity is affected by the gas flow rate. The effect is reduced by reducing the temperature elevating/lowering rate.

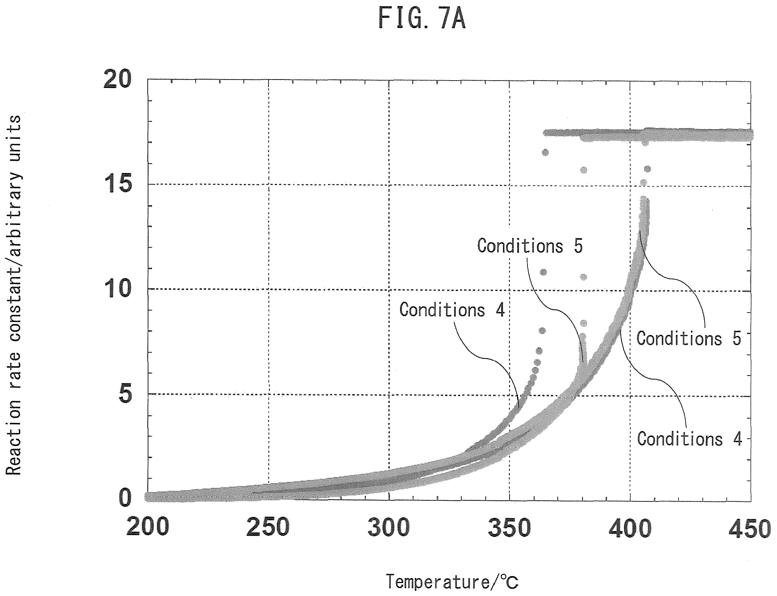

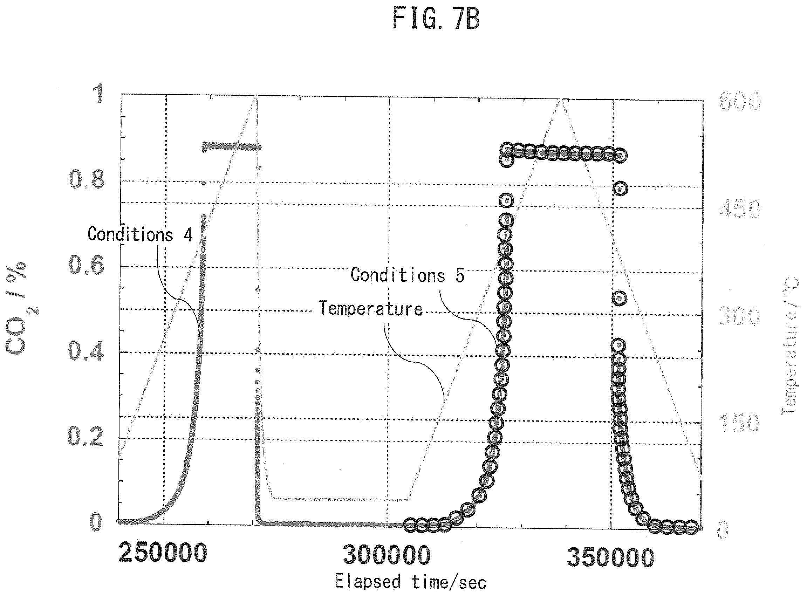

Fig. 7A is a graph showing the relationship between the apparent CO oxidation reaction rate constant and catalyst temperature, when the lean burn exhaust gas was flowed over the catalyst of Example 1-4 under conditions 4 and 5. Fig. 7B is a graph showing CO oxidation catalyst properties, when the lean burn exhaust gas was flowed over the catalyst of Example 1-4 under conditions 4 and 5.

If the temperature elevating/lowering rate is at 1°C per minute (conditions 5), the temperature dependence of catalytic activity matches with the temperature elevating/lowering, except for hysteresis (a drastic change in catalytic activity at 360°C and 410°C). It was thus demonstrated that under these temperature elevating/lowering conditions, it is possible to correctly measure the temperature dependence of catalytic activity under steady state conditions.

In contrast, during spontaneous temperature lowering (conditions 4), a difference between the temperature elevating/lowering was observed even at above 330°C. That is, since the temperature-lowering rate is too rapid in the spontaneous temperature lowering, it was not a steady state condition. Therefore, data measured under the spontaneous temperature lowering conditions cannot be used for evaluation of the catalytic activity.

The steep change in the reaction rate constant (hysteresis) observed with the temperature elevating/lowering at 1°C per minute (conditions 5) is due to transition of the Pt catalyst between a CO-rich state (low-temperature end) and an oxygen-rich state (high-temperature end). In other words, it is due to bistability and the dependence of the transition temperature on the direction of temperature change.

This phenomenon has been reported for bulk Pt and nanoparticles, but bistability in the subnano space comprising a few tens of atoms, as in this system, is a new discovery.

<Evaluation under diesel exhaust gas conditions>

### (Measuring method)

The diesel exhaust gas (see Table 2 for composition and total pressure) was flowed over the catalyst of Example 1-4 (catalyst metal: Pt clusters (number of atoms: 1 to 40), support: silicon carbide powder) and the catalyst of Reference Example 1-1 (practical catalyst) at a flow rate of 20 cc per minute and a temperature elevating/lowering rate of 1°C per minute, and the temperature dependence of the CO oxidation catalytic activity of each catalyst was measured.

As pretreatment for the sample, the temperature was raised to 800°C at 10°C per minute while flowing helium, after which it was cooled to room temperature, and then heated at 10°C per minute and lowered in temperature spontaneously, while flowing the exhaust gas.

### (Results and observations)

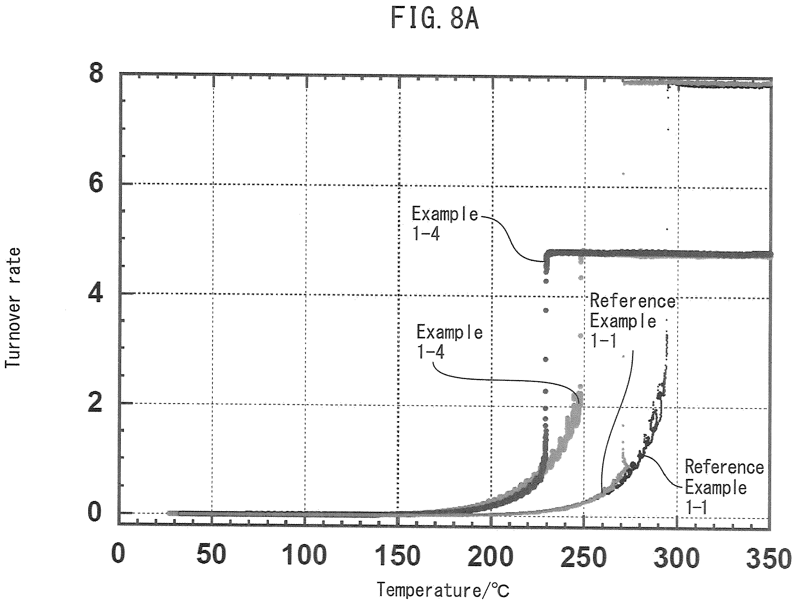

Fig. 8A is a graph showing the relationship between turnover rate and catalyst temperature, when the diesel exhaust gas was flowed over the catalyst of Example 1-4 and the catalyst of Reference Example 1-1 under the prescribed conditions.

As shown in Fig. 8A, the catalyst of Example 1-4 began the CO oxidation at a temperature of approximately 50°C lower than Reference Example 1-1. Furthermore, even though the catalyst of Reference Example 1-1 included large amounts of ceria and zirconia which have high oxygen absorption and release capacity, the turnover rate of catalyst of Example 1-4 was higher than that of the catalyst of Reference Example 1-1.

Considering the hysteresis, when compared at 235°C, which is the mean temperature the during increase and decrease in the temperature and at which the Pt clusters supported on the silicon carbide powder exhibit 100% CO conversion, there is a difference of 40 times or greater in the turnover rate between the catalyst of Example 1-4 and the catalyst of Reference Example 1-1. In other words, these results suggest that the catalyst of Example 1-4 allows the amount of Pt to be reduced by two orders of magnitude compared to a conventional catalyst. Furthermore, it is seen that even though silicon carbide has a specific surface area is one order of magnitude lower than conventional support substances such as alumina, it is possible to maintain catalyst performance without changing the catalyst volume.

The difference in the saturation value for the turnover rate between the catalyst of Example 1-4 and the catalyst of Reference Example 1-1 is due to the difference in the amount of Pt present, and does not represent a difference in catalytic activity.

### <Evaluation under lean burn exhaust gas conditions>

### (Measuring method)

The lean burn exhaust gas (see Table 2 for composition and total pressure) was flowed over the catalyst of Example 1-4 (catalyst metal: Pt clusters (number of atoms: 1 to 40), support: silicon carbide powder) and the catalyst of Reference Example 1-1 (practical catalyst), at a flow rate of 20 cc per minute and a temperature elevating/lowering rate of 1°C per minute, and the temperature dependence of the CO oxidation catalytic activity of each catalyst was measured.

### (Results and discussion)

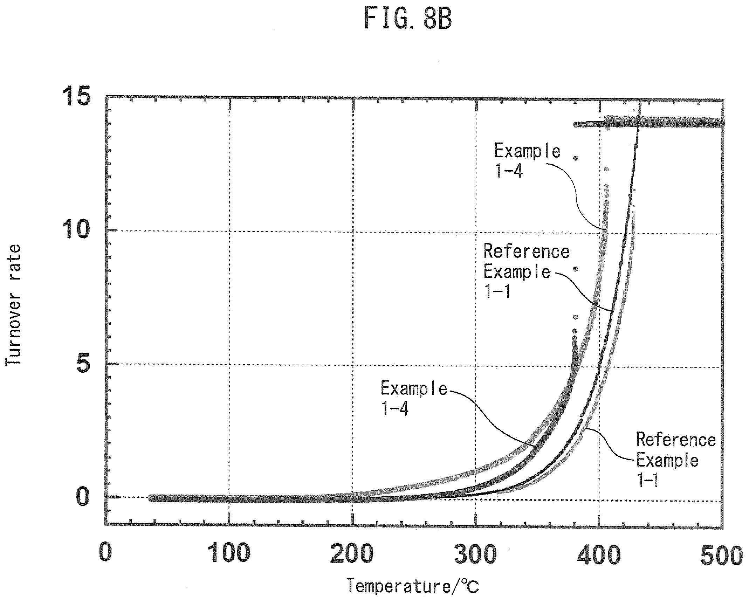

Fig. 8B is a graph showing the relationship between the turnover rate and catalyst temperature, when the lean burn exhaust gas was flowed over the catalyst of Example 1-4 and the catalyst of Reference Example 1-1 under the prescribed conditions.

As shown in Fig. 8B, the catalyst of Example 1-4 began the CO oxidation at a temperature lower than Reference Example 1-1.

Considering the hysteresis, when compared at 390°C, which is the mean temperature during the increase and decrease in the temperature and at which the Pt clusters supported on the silicon carbide powder exhibit 100% CO conversion, there is a difference of 5 times or greater in the turnover rate between the catalyst of Example 1-4 and the catalyst of Reference Example 1-1.

Considering the oxygen absorption and release capacity of ceria and zirconia, this suggests that the amount of Pt can be reduced by one order of magnitude or more even under the lean burn conditions which are the gas conditions where the oxygen excess is overwhelmingly lower than the diesel conditions. Furthermore, when the actual performance is compared after subtracting the effect of the oxygen absorption and release capacity of ceria and zirconia, it is seen that the reduction is even one order of magnitude or more efficient.

The difference in the saturation value for the turnover rate between the catalyst of Example 1-4 and the catalyst of Reference Example 1-1 is due to the difference in the amount of Pt present, and does not represent a difference in catalytic activity.

### <Evaluation of effects of Pt particle sizes and total number of Pt atoms>

### (Measuring method)

In order to examine the effects of the sizes of the Pt clusters bonded to the silicon carbide powder and of the Pt nanoparticles, and number of atomic layers, the lean burn exhaust gas (see Table 2 for the composition and total pressure) was flowed over the catalyst of Example 1-4 (catalyst metal: Pt clusters (number of atoms: 1 to 40), support: silicon carbide powder) and the catalyst of Reference Example 1-2 (catalyst metal: Pt nanoparticles, support: silicon carbide powder) at a flow rate of 20 cc/min with elevating and lowering the temperature at a temperature elevating/lowering rate of 1°C per minute, while the CO oxidation catalytic activity of each catalyst was measured.

### (Results and discussion)

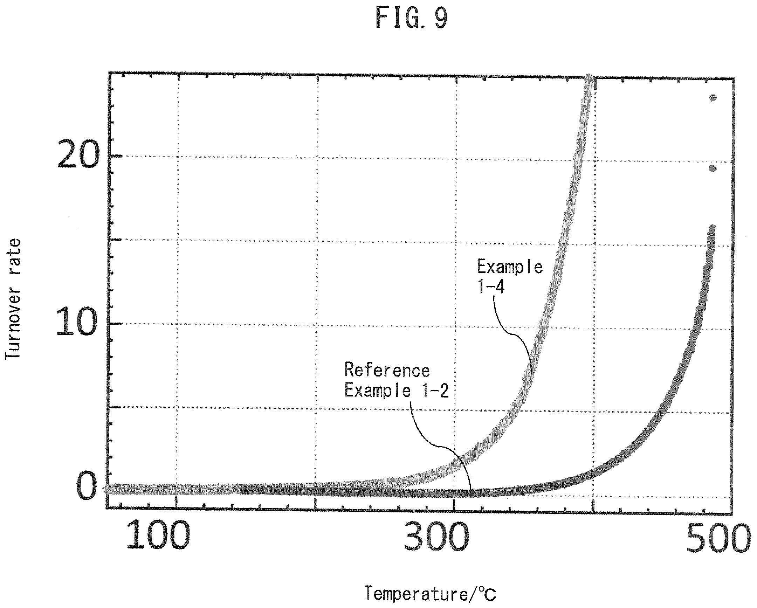

Fig. 9 is a graph showing the relationship between the turnover rate and catalyst temperature, when the lean burn exhaust gas was flowed over the catalyst of Example 1-4 and the catalyst of Reference Example 1-2 under the prescribed conditions.

As shown in Fig. 9, the catalyst of Example 1-4 began CO oxidation at a temperature lower than the catalyst of Reference Example 1-2. It is thus seen that the catalyst having Pt clusters of smaller sizes possesses higher performance than that of large sizes, because of greater contribution of the Pt bonded to the Si.

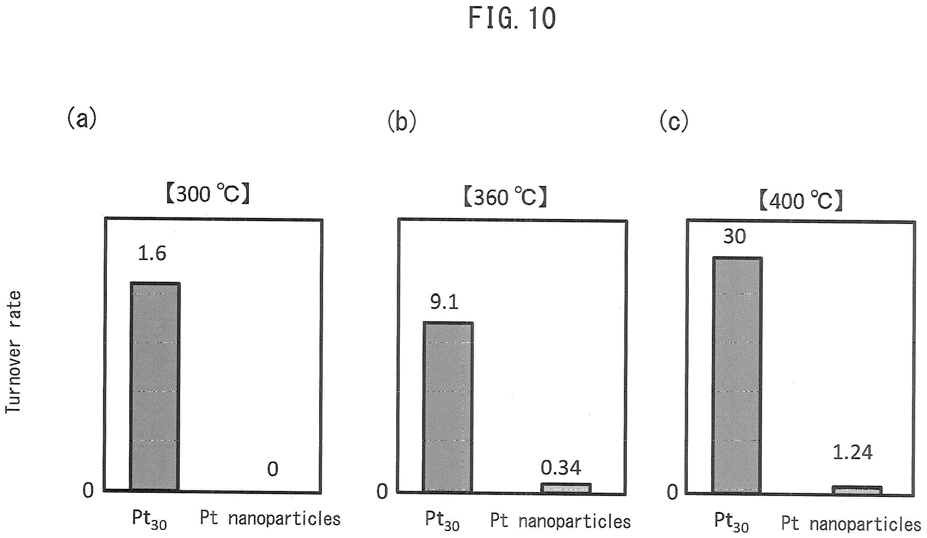

In order to show effect in reduction in Pt, the results of Fig. 9 were read for each temperature and the CO purification turnover rate at each temperature was compared for the Pt clusters and Pt nanoparticles, giving the results shown in Fig. 10 (reanalyzed based on the quantitative analysis results for Pt).

Fig. 10 is a graph showing the relationship between the turnover rate for each catalyst and catalyst temperature, when the lean burn exhaust gas was flowed over the catalyst of Example 1-4 and the catalyst of Reference Example 1-2 under the prescribed conditions. As shown in Fig. 10, with the catalyst of Example 1-4 and the catalyst of Reference Example 1-2, there was a difference of a factor of at least 20 times in the turnover rate at 300 to 400°C. This suggests that using the catalyst of Example 1-4 can reduce the amount of Pt used to less than 1/10.

### <Evaluation of high-temperature durability>

### (Measuring method)

The lean burn exhaust gas (see Table 2 for composition and total pressure) was flowed over the catalyst of Example 1-1 (catalyst metal: Pt cluster 30mers, support: silicon carbide powder) at a flow rate of 100 cc per minute, with repeating twice elevating the temperature to 950°C at a temperature-elevating rate of 10°C per minute and then lowering by air-cooling, while the catalytic activity of CO oxidation during that time was measured.

### (Results and discussion)

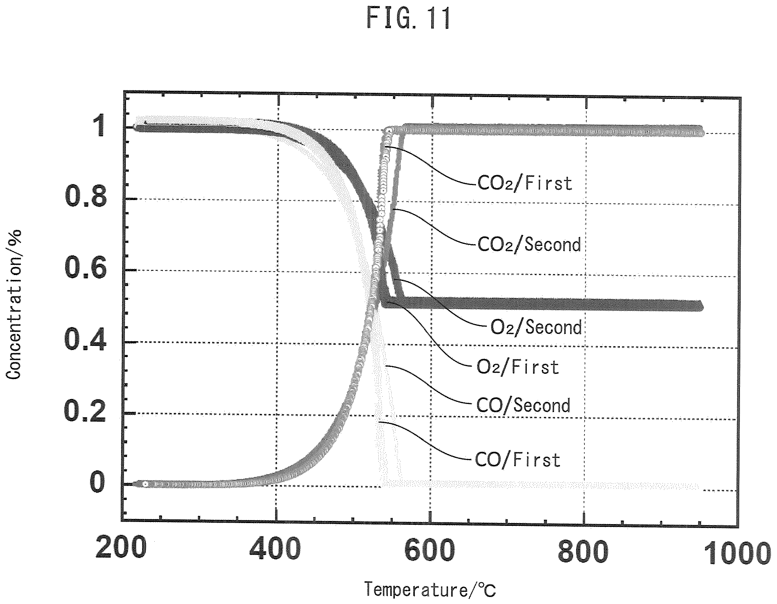

Fig. 11 is a graph showing the relationship between CO, O₂ and CO₂ concentration in the model exhaust gas and catalyst temperature, when the lean burn exhaust gas was flowed over the catalyst of Example 1-1 under the prescribed conditions.

As shown in Fig. 11, the relationship between the change in the CO, O₂ and CO₂ concentration and temperature was virtually unchanged even when the procedure of elevating the temperature to 950°C with flowing lean burn exhaust gas over the catalyst of Example 1-1 was repeated twice. This indicated that the catalyst of Example 1-1 has high-temperature durability at 950°C.

### <Evaluation of effect due to different support>

### (Measuring method)

The CO purification catalyst performance of Example 1-5 (catalyst metal: Pt cluster 30mers, support: single crystal 6H-SiC (0001) surface substrate) and Reference Example 1-3 (catalyst metal: Pt cluster 30mers, support: cerium oxide substrate) was compared under the same conditions. Specifically, each catalyst was heated at a temperature-elevating rate of 0.3°C per second while maintaining the oxygen partial pressure of 1 × 10⁻⁴ Pa and the CO partial pressure of 1 × 10⁻⁵ Pa, and the concentration of CO₂ produced during this reaction was measured.

### (Results and discussion)

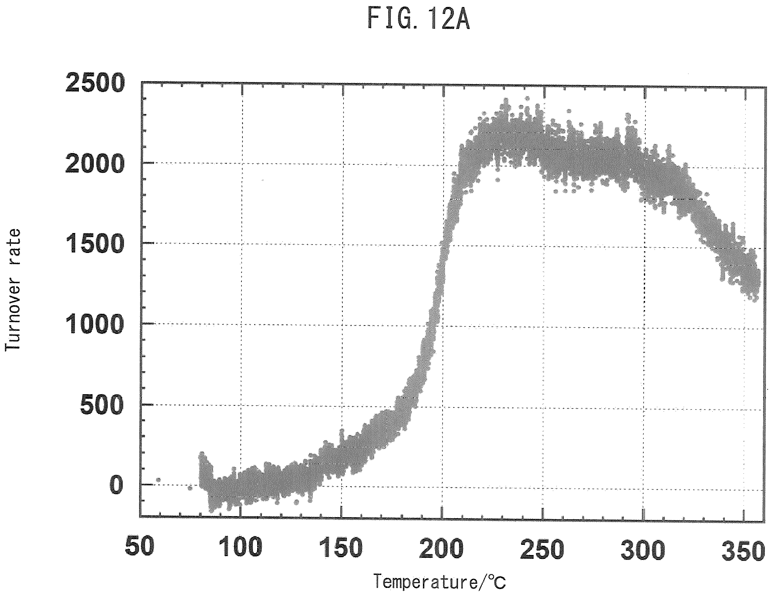

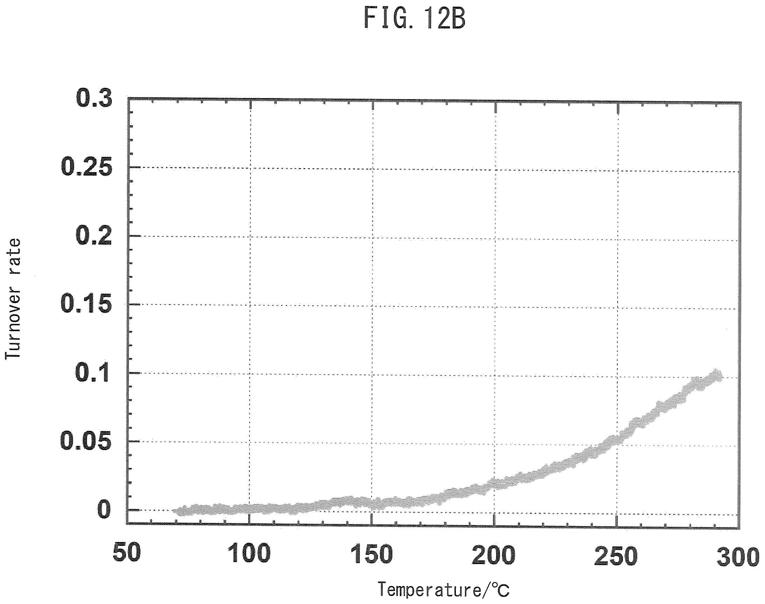

Fig. 12A is a graph showing the relationship between the catalyst temperature and turnover rate, when the CO purification catalyst performance of the catalyst of Example 1-5 was measured. Fig. 12B is a graph showing the relationship between the catalyst temperature and turnover rate, when the CO purification catalyst performance of the catalyst of Reference Example 1-3 was measured.

As shown in Fig. 12A, with the catalyst of Example 1-5, the turnover rate began to increase at about 100°C, and reached maximum near 220°C. With the catalyst of Reference Example 1-3, on the other hand, as shown in Fig. 12B, the turnover rate began to increase at about 200°C gradually.

As is clear from these graphs, the CO purification proceeds with higher efficiency and at lower temperature with a catalyst having Pt cluster 30mers supported on a silicon carbide carrier such as the catalyst of Example 1-5, in which electrons are localized between the Pt clusters and the support, , as compared to a catalyst having Pt cluster 30mers supported on cerium oxide such as the catalyst of Reference Example 1-3, in which electrons are not localized between the Pt clusters and the support..

### <Evaluation of optimal cluster size>

### (Measuring method)

The lean burn exhaust gas (see Table 2 for composition and total pressure) was flowed over the catalyst of Example 1-1 (catalyst metal: Pt cluster 30mers, support: silicon carbide powder), the catalyst of Example 1-2 (catalyst metal: Pt cluster 20mers, support: silicon carbide powder) and the catalyst of Example 1-3 (catalyst metal: Pt cluster 10mers, support: silicon carbide powder), at a flow rate of 20 cc per minute while elevating and lowering the temperature, and the CO purification catalyst performance of each catalyst was measured.

### (Results and evaluation)

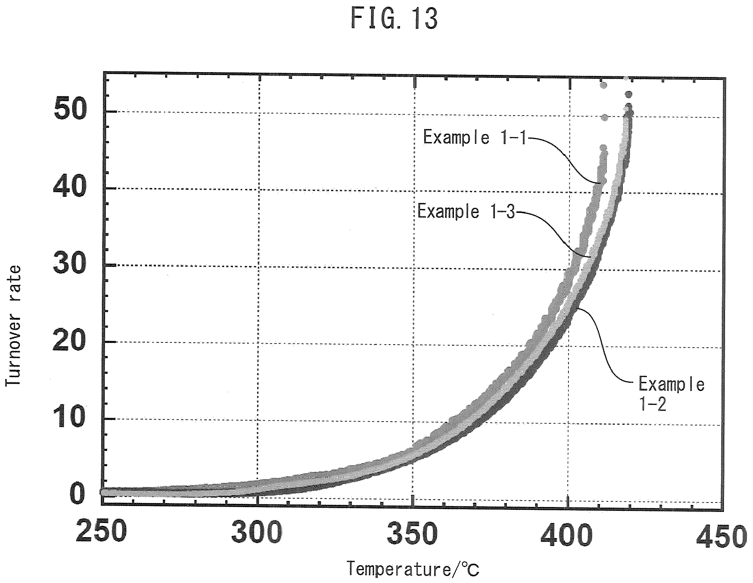

Fig. 13 is a graph showing the relationship between the catalyst temperature and turnover rate, when the CO purification catalyst performances of the catalyst of Example 1-1, the catalyst of Example 1-2 and the catalyst of Example 1-3 were measured.

For each catalyst, the Pt cluster 30mers had higher CO purification capacity at lower temperature than icosamers or decamers. Among these catalysts, therefore, it was exhibited that the Pt clusters 30mers possesses catalytic activity at the lowest temperature.

### <Evaluating contribution of support to CO purification>

### (Measuring method)

The lean burn exhaust gas (see Table 2 for composition and total pressure) was flowed over the sample of Reference Example 3-1 (catalyst metal: none, support: silicon carbide powder) and the sample of Reference Example 3-2 (catalyst metal: none, support: silicon carbide powder and quartz sand (1:1 ratio)) at a flow rate of 20 cc per minute while elevating the temperature to 800°C at 1°C per minute, and the CO oxidation catalytic activity was measured.

### (Results and discussion)

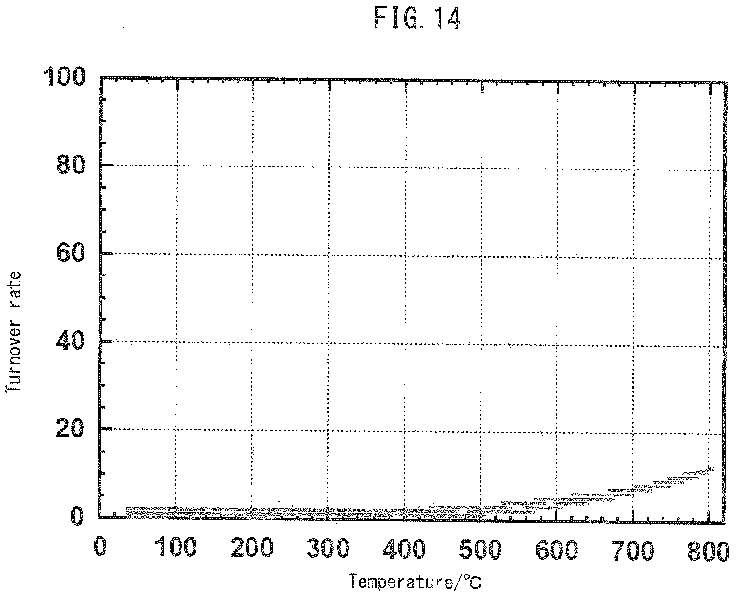

Fig. 14 is a graph showing the relationship between the catalyst temperature and CO purification rate, when the lean burn exhaust gas was flowed over the sample of Reference Example 3-1 under the prescribed conditions.

With Reference Example 3-1, as shown in Fig. 14, CO₂ began to be produced at 500°C, but even at 800°C, the contribution was only about 12%, in terms of conversion. Similar results were obtained with Reference Example 3-2, although they are not shown in the graph.

Thus, while the sample of Reference Example 3-1 and the sample of Reference Example 3-2 had the CO oxidation catalytic activity, but the activity was negligibly small compared with the silicon carbide supporting Pt clusters.

The sample of Reference Example 3-1 and the sample of Reference Example 3-2 were also heated while flowing the stoichiometric exhaust gas, in the same manner, but no NO reduction was detected even during the temperature increase to 800°C.

This demonstrated that the contribution of the silicon carbide carrier (100 nm)/Si (0.5 mm) to CO oxidation is approximately the same as the quartz sand under these experimental conditions, and can be ignored at 500°C or below.

### <Evaluation of exhaust gas purification capacity of catalyst comprising Rh clusters supported on silicon carbide powder>

### (Measuring method)

The lean burn exhaust gas (see Table 2 for composition and total pressure) was flowed over the catalyst of Example 2-1 (catalyst metal: Rh cluster 30mers, support: silicon carbide powder) and the catalyst of Reference Example 2-1 (catalyst metal: Rh nanoparticles, support: silicon carbide powder) at a flow rate of 100.3 cc per minute, while a procedure of elevating the temperature to 800°C at 10°C per minute and then air-cooling was repeated 15 times. The CO purification rate gradually decreased with the repeated heating, essentially settling down at the 15th set of the temperature elevation/lowering (the decrease in the purification rate is thought to be due to the change in the surface condition instead of aggregation of Rh clusters).

Next, the lean burn exhaust gas (see Table 2 for composition and total pressure) was flowed over the catalysts at a flow rate of 100.3 cc per minute with elevating and lowering the temperature at 1°C per minute, while the CO purification turnover rate was measured.

In addition, the stoichiometric exhaust gas (see Table 2 for composition and total pressure) was flowed at a rate of 100.3 cc per minute with elevating and lowering the temperature at 1°C per minute, while the CO and NO purification turnover rates were measured.

### (Results and evaluation)

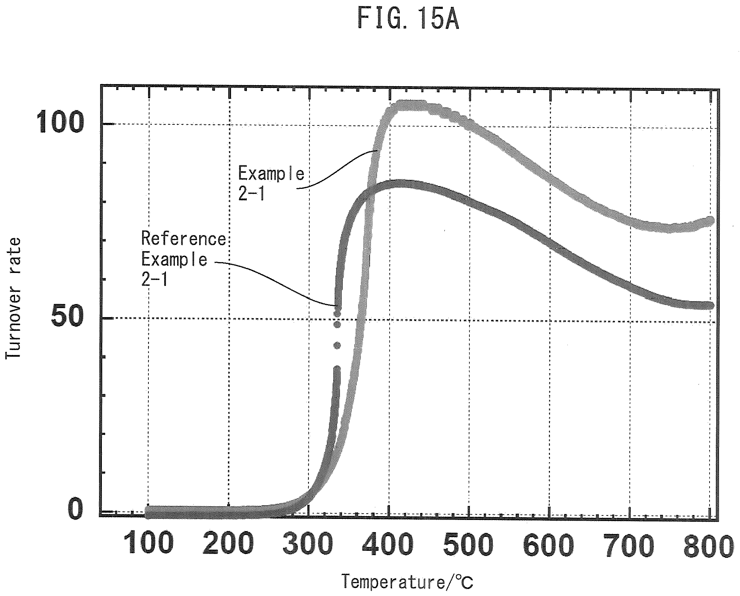

Fig. 15A is a graph showing the relationship between the CO purification turnover rate and catalyst temperature, when the lean burn exhaust gas was flowed over the catalyst of Example 2-1 and the catalyst of Reference Example 2-1 under prescribed conditions.

As seen in Fig. 15A, the catalyst of Example 2-1, which was a catalyst having Rh clusters supported on silicon carbide powder, can be said to have higher CO purification performance at a low temperature of near 400°C, compared to the catalyst of Reference Example 2-1, which was a catalyst having Rh nanoparticles supported on silicon carbide powder.

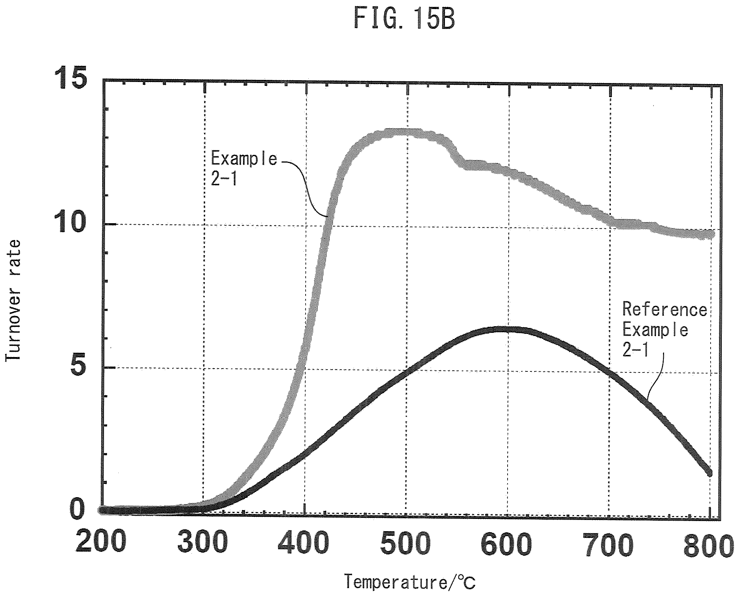

Fig. 15B is a graph showing the relationship between the NO purification turnover rate and catalyst temperature, when the stoichiometric exhaust gas was flowed over the catalyst of Example 2-1 and the catalyst of Reference Example 2-1 under the prescribed conditions.

As seen in Fig. 15B, the catalyst of Example 2-1, which was a catalyst having Rh clusters supported on the silicon carbide powder, can be said to have higher NO purification performance at a low temperature, compared to the catalyst of Reference Example 2-1, which was a catalyst having Rh nanoparticles supported on the silicon carbide powder. Specifically, with the catalyst of Example 2-1, the NO purification turnover rate was 10 or higher near approximately 430°C, whereas with the catalyst of Reference Example 2-1, the NO purification turnover rate was maximum near approximately 600°C but the turnover rate for NO was lower than 7. Even with the flow of the stoichiometric exhaust gas to the catalyst of Example 2-1, no nitrogen-containing products other than N₂ (such as N₂O and NO₂) were detected.

### <Comparison of exhaust gas purification capacity of catalysts comprising Pt clusters, Rh clusters and Pd clusters supported on silicon carbide carriers>

### (Measuring method)

The lean burn exhaust gas (see Table 2 for composition and total pressure) was flowed over the catalyst of Example 1-2 (catalyst metal: Pt cluster 20mers, support: silicon carbide powder), the catalyst of Example 2-1 (catalyst metal: Rh cluster 30mers, support: silicon carbide powder) and the catalyst of Example 3-1 (catalyst metal: Pd cluster 30mers, support: silicon carbide powder) at a flow rate of 100 cc per minute with elevating and lowering the temperature at a rate of 1°C per minute, while the CO oxidation catalytic activity of each catalyst was measured.

### (Results and evaluation)

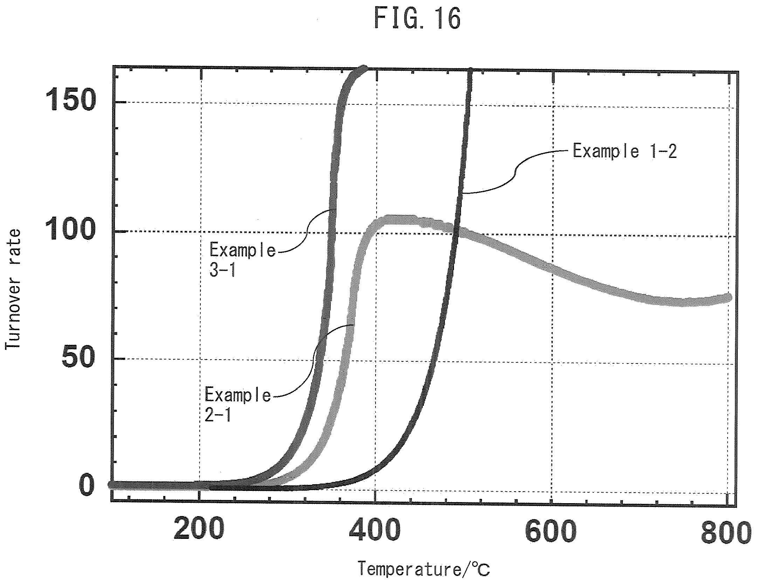

Fig. 16 is a graph showing the relationship between the CO purification turnover rate and catalyst temperature, when the lean burn exhaust gas was flowed over the catalyst of Example 1-2, the catalyst of Example 2-1 and the catalyst of Example 3-1 under the prescribed conditions.

From Fig. 16 it may be concluded that the temperature at which the CO purification began was lowest with the catalyst of Example 3-1, which was a catalyst comprising the Pd clusters supported on the silicon carbide powder, followed by the catalyst of Example 1-2 which was a catalyst comprising the Pt clusters supported on the silicon carbide powder, and then the catalyst of Example 2-1 which was a catalyst comprising the Rh clusters supported on the silicon carbide powder.

Furthermore, with the catalyst of Example 3-1 which was a catalyst comprising the Pd clusters supported on the silicon carbide powder, the CO purification turnover rate was 100 or higher at near approximately 350°C. Furthermore, with the catalyst of Example 1-2 which was a catalyst comprising the Pt clusters supported on the silicon carbide powder, the CO purification turnover rate was 100 or higher at near approximately 510°C. With the catalyst of Example 2-1 which was a catalyst comprising the Rh clusters supported on the silicon carbide powder, the CO purification turnover rate was 100 or higher at near approximately 400°C.

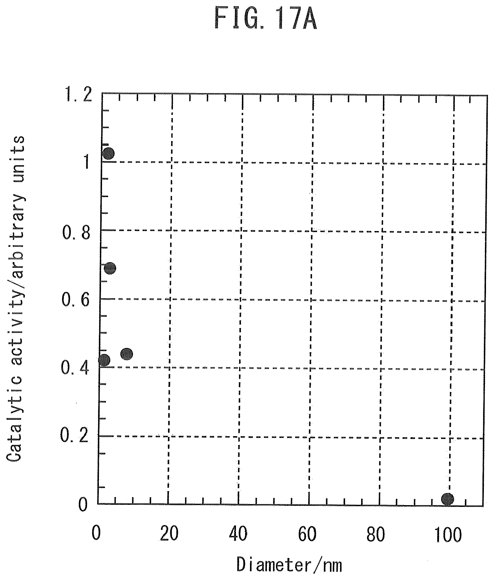

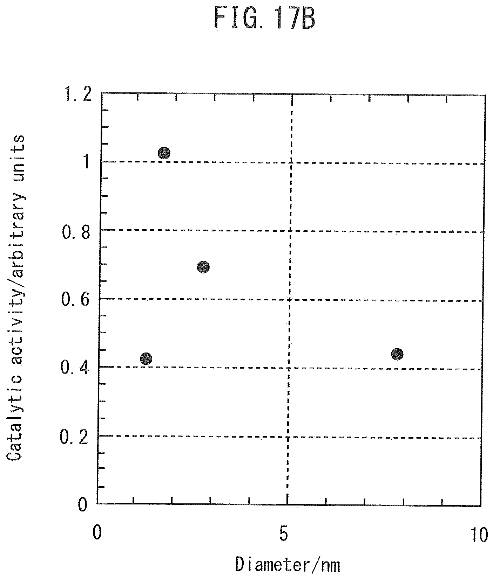

Fig. 17A is a graph showing the relationship between the Pd nanoparticle size and catalytic activity. Specifically, Fig. 17A is a graph showing the relationship between the Pd nanoparticle size and catalytic activity, based on the data relating to the Pd nanoparticle size and catalytic activity in NPL 6. Fig. 17B is an enlarged graph showing the range of 0 to 10 nm on the abscissa of the graph of Fig. 17A.

As seen in Fig. 17A and Fig. 17B, the Pd nanoparticles have increased the catalytic activity at the particle size of approximately 100 nm, reached the maximum at near 3 to 4 nm and the catalytic activity decreasing thereafter at the smaller particle size.

Therefore, the satisfactory catalytic activity of the catalyst of Example 3-1 that had Pd cluster 30mers was highly unexpected based on the publicly known technology.

### REFERENCE SIGNS LIST

- 10: Pt cluster
- 15: Pt atom
- 20: Region of increased electron concentration
- 30: Oxygen molecule
- 40: Activated oxygen atom
- 50: Carbon monoxide molecule
- 60: Carbon dioxide molecule
- 100: Silicon carbide carrier

## Claims

1. A cluster-supporting catalyst having a silicon carbide carrier and precious metal clusters supported on the silicon carbide carrier.

2. The catalyst according to claim 1, wherein the silicon carbide carrier and the precious metal atoms of the precious metal clusters are bonded by metal silicide bonds.

3. The catalyst according to claim 1 or 2, wherein the heights from the surface of the silicon carbide carrier to the apices of the precious metal clusters are less than 1.0 nm, as measured with a scanning tunneling microscope.

4. The catalyst according to any one of claims 1 to 3, wherein the electron concentration is increased between the silicon carbide carrier and the precious metal clusters, compared to the other locations of the silicon carbide carrier and/or the other locations of the precious metal clusters.

5. The catalyst according to any one of claims 1 to 4, wherein the precious metal clusters are Pt clusters, Pd clusters or Rh clusters.

6. The catalyst according to any one of claims 1 to 5, wherein the number of the precious metal atoms in the precious metal clusters is 2 to 500.

7. The catalyst according to any one of claims 1 to 6, wherein the number of the atomic layer of the precious metal clusters is four or less from the surface of the silicon carbide carrier, and/or wherein the precious metal clusters are supported at the regions of the silicon carbide carrier where the Si is exposed.

8. The catalyst according to any one of claims 1 to 7, wherein the precious metal clusters are Pt clusters, and the catalyst has the following feature:
The number of CO molecules oxidized in 1 second per Pt atom is 100 or greater at 560°C or below, when a gas at atmospheric pressure containing 1.0% CO, 1.0% O₂ and 98.0% He has been flowed at 100 cc per minute over the catalyst which contains 480 ng of Pt, while heating the catalyst from room temperature at 1°C per minute.

9. The catalyst according to any one of claims 1 to 7, wherein the precious metal clusters are Rh clusters, and the catalyst has one of the following features:
(A) The number of CO molecules oxidized in 1 second per Rh atom is 100 or greater at 440°C or below, when a gas at atmospheric pressure containing 1.0% CO, 1.0% O₂ and 98.0% He has been flowed at 100 cc per minute over the catalyst which contains 660 ng of Rh, while heating the catalyst from room temperature at 1°C per minute,
(B) The number of NO molecules oxidized in 1 second per Rh atom is 10 or greater at 500°C or below, when a gas at atmospheric pressure containing 0.15% NO, 0.65% CO, 0.25% O₂ and 98.95% He has been flowed at 100 cc per minute over the catalyst which contains 660 ng of Rh, while heating the catalyst from room temperature at 1°C per minute.

10. The catalyst according to any one of claims 1 to 7, wherein the precious metal clusters are Pd clusters, and the catalyst has the following feature:
The number of CO molecules oxidized in 1 second per Pd atom is 100 or greater at 420°C or below, when a gas at atmospheric pressure containing 1.0% CO, 1.0% O₂ and 98.0% He has been flowed at 100 cc per minute over the catalyst which contains 430 ng of Pd, while heating the catalyst from room temperature at 1°C per minute.

11. The catalyst according to any one of claims 1 to 10, which is an exhaust gas purifying catalyst.

12. The catalyst according to any one of claims 1 to 7, which is an electrode catalyst for a fuel cell.

13. A catalyst layer containing a catalyst according to any one of claims 1 to 13, preferably further containing a metal complex that contains CeO₂ and ZrO₂, or CeO₂.

14. A method for producing a cluster-supporting catalyst, the method including:
sputtering a precious metal target to generate precious metal clusters, and impacting the generated precious metal clusters on the surface of a silicon carbide carrier to support them.

15. The method according to claim 14, which includes removing carbon from a region of the surface of the silicon carbide carrier to expose Si, before supporting the precious metal clusters, and/or which includes accumulating a carbon film on a region of the surface of the silicon carbide carrier.
